# EUROPEAN PATENT APPLICATION

(11) **EP 4 529 108 A1**
(43) Date of publication of application: **26.03.2025**
(21) Application number: 23834704.1
(22) Date of filing: 29.06.2023
(51) Int. Cl.: H04L 27/20

(54) **MODULATION AND CODING METHOD AND APPARATUS**

(30) Priority: 08.07.2022 CN 202210801533; 23.11.2022 CN 202211476283
(71) Applicant: Huawei Technologies Co., Ltd., Shenzhen, Guangdong 518129 (CN)
(72) Inventor: TANG, Yunshuai, Shenzhen, Guangdong 518129 (CN)
(74) Representative: Pfenning, Meinig & Partner mbB
(86) International application number: PCT/CN2023/103740
(87) International publication number: WO 2024/007937

(57) **Abstract**

A modulation and coding method and apparatus are provided, may be applied to an enhanced wireless fidelity (wireless fidelity, Wi-Fi) scenario, and in particular, applied to a fading channel or circuit switched data (circuit switch data, CSD) service scenario, to help improve modulation and coding performance without increasing an additional resource. The method includes: A first communication apparatus maps all bit information of a user in frequency domain, then forms a bit pair by using bit information obtained through mapping and the original bit information, invokes quadrature phase shift keying (quadrature phase shift keying, QPSK) modulation for coding to obtain second bit information, and sends the second bit information to a second communication apparatus.

## Description

This application claims priorities to Chinese Patent Application No. 202210801533.4, filed with the China National Intellectual Property Administration on July 8, 2021 and entitled "MODULATION AND CODING METHOD AND APPARATUS", and to Chinese Patent Application No. 202211476283.8, filed with the China National Intellectual Property Administration on November 23, 2021 and entitled "MODULATION AND CODING METHOD AND APPARATUS", both of which are incorporated herein by reference in their entireties.

### TECHNICAL FIELD

This application relates to the communication field, and more specifically, to a modulation and coding method and apparatus.

### BACKGROUND

Binary phase shift keying (binary phase shift keying, BPSK) is a scheme of representing information phase shift keying by using complex-valued waveforms with different phase shifts, can convert an analog signal into a data value, and is widely applied to medium-speed and high-speed data transmission scenarios. However, in fading channel and circuit switched data (circuit switch data, CSD) service scenarios, because a low-order modulation and coding scheme (modulation and coding scheme, MCS) usually operates in a condition with a low signal-to-noise ratio (signal noise ratio, SNR), especially an MCS 0 usually corresponds to a scenario with a lowest signal-to-noise ratio, sending is usually performed based on a single stream, to improve strength of a received signal, so as to improve link quality. In this case, diversity effect of a signal in in-phase (in-phase, I) and quadrature (quadrature, Q) dimensions cannot be fully used, resulting in a coding failure when fading is severe.

Therefore, a modulation and coding method is urgently needed, to reduce power consumption and complexity of channel coding and ensure specific channel coding performance.

### SUMMARY

This application provides a modulation and coding method and apparatus, to help improve modulation and coding performance.

According to a first aspect, a modulation and coding method is provided. The method includes: A first communication apparatus performs modulation and coding on first bit information based on a first modulation scheme, to obtain second bit information. The first modulation scheme includes: mapping the first bit information in frequency domain, to obtain third bit information, forming a bit pair by using the third bit information and the first bit information, and performing quadrature phase shift keying (quadrature phase shift keying, QPSK) modulation and coding on the bit pair, to obtain the second bit information. The first communication apparatus sends the second bit information. Modulation and coding performed on the first bit information based on the first modulation scheme is performed before inverse fast Fourier transform, and mapping includes but is not limited to cyclic shift or another typical mapping mode, for example, one-to-one mapping, one-to-many mapping, or many-to-one mapping.

According to the technical solution of this application, after bit information of a user is mapped in frequency domain, bit information obtained through mapping and the original bit information form a bit pair, and quadrature phase shift keying modulation is invoked. This helps improve modulation and coding performance without increasing an additional resource.

With reference to the first aspect, in some implementations of the first aspect, the mapping the first bit information in frequency domain includes: performing cyclic shift on the first bit information in frequency domain based on a sending mode in which the first communication apparatus sends the second bit information.

With reference to the first aspect, in some implementations of the first aspect, the first bit information includes M pieces of bit information, and M is a positive integer; and the performing cyclic shift on the first bit information in frequency domain includes: performing cyclic shift on the M pieces of bit information in frequency domain consecutively.

With reference to the first aspect, in some other implementations of the first aspect, the first bit information includes M pieces of bit information, and M is a positive integer; and the performing cyclic shift on the first bit information in frequency domain includes: performing cyclic shift on the M pieces of bit information in frequency domain at an interval of N pieces of bit information, where N is a positive integer less than M.

With reference to the first aspect, in some implementations of the first aspect, the method further includes: The first communication apparatus sends indication information, where the indication information indicates the first modulation scheme.

With reference to the first aspect, in some implementations of the first aspect, the indication information is carried in a disregard bit (Disregard bit), a validate bit (Validate bit), or a reserved bit (Reserved bit).

With reference to the first aspect, in some implementations of the first aspect, the indication information includes a modulation and coding scheme MCS.

With reference to the first aspect, in some implementations of the first aspect, before the indication information is sent, the method further includes: The first communication apparatus receives capability information of a second communication apparatus, where the capability information indicates that the second communication apparatus supports the first modulation scheme.

According to a second aspect, a modulation and coding method is provided. The method includes: A second communication apparatus receives second bit information, and demodulates the second bit information based on a first modulation scheme, to obtain first bit information. The first modulation scheme includes: mapping the first bit information in frequency domain, to obtain third bit information, forming a bit pair by using the third bit information and the first bit information, and performing quadrature phase shift keying QPSK modulation and coding on the bit pair, to obtain the second bit information.

According to the technical solution of this application, after bit information of a user is mapped in frequency domain, bit information obtained through mapping and the original bit information form a bit pair, and quadrature phase shift keying modulation is invoked. This helps improve modulation and coding performance without increasing an additional resource.

With reference to the second aspect, in some implementations of the second aspect, the third bit information is obtained by performing cyclic shift on the first bit information in frequency domain based on a sending mode in which a first communication apparatus sends the second bit information.

With reference to the second aspect, in some implementations of the second aspect, the first bit information includes M pieces of bit information, and M is a positive integer; and the third bit information is obtained by performing cyclic shift on the M pieces of bit information in frequency domain consecutively.

With reference to the second aspect, in some other implementations of the second aspect, the first bit information includes M pieces of bit information, and M is a positive integer; and the third bit information is obtained by performing cyclic shift on the M pieces of bit information in frequency domain at an interval of N pieces of bit information, where N is a positive integer less than M.

With reference to the second aspect, in some implementations of the second aspect, the method further includes: The second communication apparatus receives indication information, where the indication information indicates the first modulation scheme.

With reference to the second aspect, in some implementations of the second aspect, the indication information is carried in a disregard bit (Disregard bit), a validate bit (Validate bit), or a reserved bit (Reserved bit).

With reference to the second aspect, in some implementations of the second aspect, the indication information includes a modulation and coding scheme MCS.

With reference to the second aspect, in some implementations of the second aspect, before the indication information is received, the method further includes: The second communication apparatus sends capability information, where the capability information indicates that the second communication apparatus supports the first modulation scheme.

According to a third aspect, a modulation and coding method is provided. The method includes: A first communication apparatus performs modulation and coding on a first information bit based on a first modulation scheme, to obtain a second information bit. The first modulation scheme includes: performing cyclic shift on the first information bit in frequency domain, to obtain a third information bit, forming a bit pair by using the third information bit and the first information bit, and performing quadrature phase shift keying (quadrature phase shift keying, QPSK) modulation and coding on the bit pair, to obtain the second information bit. The first communication apparatus sends the second information bit.

According to the technical solution of this application, after cyclic shift is performed on bit information of a user in frequency domain, bit information obtained through cyclic shift and the original bit information form a bit pair, and quadrature phase shift keying modulation is invoked. This helps improve modulation and coding performance without increasing an additional resource.

With reference to the third aspect, in some implementations of the third aspect, the method further includes: The first communication apparatus sends indication information, where the indication information indicates the first modulation scheme.

According to a fourth aspect, a modulation and coding method is provided. The method includes: A second communication apparatus receives a second information bit. The second communication apparatus demodulates the second information bit based on a first modulation scheme, to obtain a first information bit. The first modulation scheme includes: performing cyclic shift on the first information bit in frequency domain, to obtain a third information bit, forming a bit pair by using the third information bit and the first information bit, and performing quadrature phase shift keying QPSK modulation and coding on the bit pair, to obtain the second information bit.

According to the technical solution of this application, after cyclic shift is performed on bit information of a user in frequency domain, bit information obtained through cyclic shift and the original bit information form a bit pair, and quadrature phase shift keying modulation is invoked. This helps improve modulation and coding performance without increasing an additional resource.

With reference to the fourth aspect, in some implementations of the fourth aspect, the method further includes: The second communication apparatus receives indication information, where the indication information indicates the first modulation scheme.

According to a fifth aspect, a modulation and coding apparatus is provided. The apparatus includes: a processing unit, configured to perform modulation and coding on first bit information based on a first modulation scheme, to obtain second bit information, where the first modulation scheme includes: mapping the first bit information in frequency domain, to obtain third bit information, forming a bit pair by using the third bit information and the first bit information, and perform QPSK modulation and coding on the bit pair, to obtain the second bit information; and a transceiver unit, configured to send the second bit information.

With reference to the fifth aspect, in some implementations of the fifth aspect, the processing unit is specifically configured to perform cyclic shift on the first bit information in frequency domain based on a sending mode in which a first communication apparatus sends the second bit information.

With reference to the fifth aspect, in some implementations of the fifth aspect, the first bit information includes M pieces of bit information, and M is a positive integer; and the processing unit is specifically configured to perform cyclic shift on the M pieces of bit information in frequency domain consecutively.

With reference to the fifth aspect, in some other implementations of the fifth aspect, the first bit information includes M pieces of bit information, and M is a positive integer; and the processing unit is specifically configured to perform cyclic shift on the M pieces of bit information in frequency domain at an interval of N pieces of bit information, where N is a positive integer less than M.

With reference to the fifth aspect, in some implementations of the fifth aspect, the transceiver unit is further configured to send indication information, where the indication information indicates the first modulation scheme.

With reference to the fifth aspect, in some implementations of the fifth aspect, the indication information is carried in a disregard bit (Disregard bit), a validate bit (Validate bit), or a reserved bit (Reserved bit).

With reference to the fifth aspect, in some implementations of the fifth aspect, the indication information includes a modulation and coding scheme MCS.

With reference to the fifth aspect, in some implementations of the fifth aspect, the transceiver unit is further configured to receive capability information of a second communication apparatus, where the capability information indicates that the second communication apparatus supports the first modulation scheme.

According to a sixth aspect, a modulation and coding apparatus is provided. The apparatus includes: a transceiver unit, configured to receive second bit information, and a processing unit, configured to demodulate the second bit information based on a first modulation scheme, to obtain first bit information. The first modulation scheme includes: mapping the first bit information in frequency domain, to obtain third bit information, forming a bit pair by using the third bit information and the first bit information, and performing quadrature phase shift keying QPSK modulation and coding on the bit pair, to obtain the second bit information.

With reference to the sixth aspect, in some implementations of the sixth aspect, the third bit information is obtained by performing cyclic shift on the first bit information in frequency domain based on a sending mode in which a first communication apparatus sends the second bit information.

With reference to the sixth aspect, in some implementations of the sixth aspect, the first bit information includes M pieces of bit information, and M is a positive integer; and the third bit information is obtained by performing cyclic shift on the M pieces of bit information in frequency domain consecutively.

With reference to the sixth aspect, in some other implementations of the sixth aspect, the first bit information includes M pieces of bit information, and M is a positive integer; and the third bit information is obtained by performing cyclic shift on the M pieces of bit information in frequency domain at an interval of N pieces of bit information, where N is a positive integer less than M.

With reference to the sixth aspect, in some implementations of the sixth aspect, the transceiver unit is further configured to receive indication information, where the indication information indicates the first modulation scheme.

With reference to the sixth aspect, in some implementations of the sixth aspect, the indication information is carried in a disregard bit (Disregard bit), a validate bit (Validate bit), or a reserved bit (Reserved bit).

With reference to the sixth aspect, in some implementations of the sixth aspect, the indication information includes a modulation and coding scheme MCS.

With reference to the sixth aspect, in some implementations of the sixth aspect, the transceiver unit is further configured to send capability information, where the capability information indicates that a second communication apparatus supports the first modulation scheme.

According to a seventh aspect, a communication apparatus is provided. The communication apparatus includes a processor and an interface circuit. The interface circuit is configured to: receive a signal from a communication apparatus other than the communication apparatus and transmit the signal to the processor, or send a signal from the processor to a communication apparatus other than the communication apparatus. The processor is configured to implement the method according to any one of the possible implementations of the first aspect or the third aspect through a logic circuit or by executing code instructions.

According to an eighth aspect, a communication apparatus is provided. The communication apparatus includes a processor and an interface circuit. The interface circuit is configured to: receive a signal from a communication apparatus other than the communication apparatus and transmit the signal to the processor, or send a signal from the processor to a communication apparatus other than the communication apparatus. The processor is configured to implement the method according to any one of the possible implementations of the second aspect or the fourth aspect through a logic circuit or by executing code instructions.

According to a ninth aspect, a computer-readable storage medium is provided. The computer-readable storage medium stores a computer program or instructions. When the computer program or the instructions are executed, the method according to any one of the possible implementations of the first aspect to the fourth aspect is implemented.

According to a tenth aspect, a computer program product including instructions is provided. When the instructions are run, the method according to any one of the possible implementations of the first aspect to the fourth aspect is implemented.

According to an eleventh aspect, a computer program is provided. The computer program includes code or instructions, and when the code or the instructions are run, the method according to any one of the possible implementations of the first aspect to the fourth aspect is implemented.

According to a twelfth aspect, a chip system is provided. The chip system includes a processor, further includes a memory, and is configured to implement the method according to any one of the possible implementations of the first aspect to the fourth aspect. The chip system includes a chip, or includes a chip and another discrete device.

According to a thirteenth aspect, a communication system is provided. The communication system includes a first communication apparatus and a second communication apparatus.

The first communication apparatus is configured to implement the method according to the implementations of the first aspect or the second aspect, and the second communication apparatus is configured to implement the method according to the implementations of the second aspect or the fourth aspect.

In a possible design, the communication system further includes another device that interacts with the first communication apparatus and the second communication apparatus in the solutions provided in embodiments of this application.

### BRIEF DESCRIPTION OF DRAWINGS

FIG. 1 is a diagram of a communication system 100 to which this application is applicable;
FIG. 2 is a diagram of some subcarriers currently on a fading channel;
FIG. 3 is a schematic flowchart of an example of a modulation and coding method according to an embodiment of this application;
FIG. 4 is a diagram of an example of frequency-domain cyclic shift according to an embodiment of this application;
FIG. 5 is a diagram of another example of frequency-domain cyclic shift according to an embodiment of this application;
FIG. 6 is a diagram of an example of sending and receiving procedures according to an embodiment of this application;
FIG. 7 is a diagram of an example of a modulation and coding device according to this application; and
FIG. 8 is a diagram of an example of a modulation and coding apparatus according to this application.

### DESCRIPTION OF EMBODIMENTS

The following describes technical solutions of this application with reference to accompanying drawings.

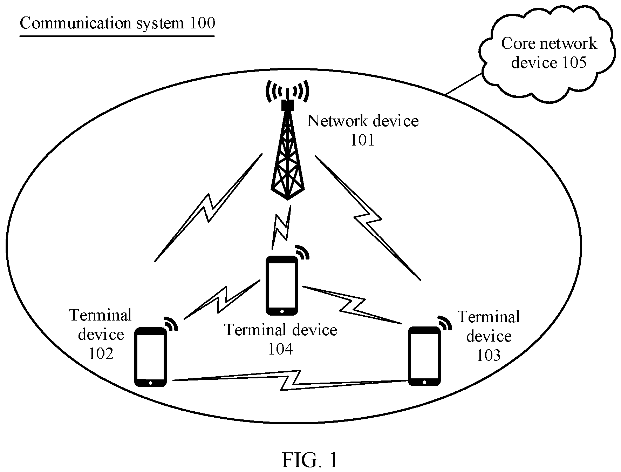

FIG. 1 is a diagram of a communication system 100 to which an embodiment of this application is applicable.

As shown in FIG. 1, the communication system 100 may include one or more network devices, for example, a network device 101 shown in FIG. 1. The communication system 100 may further include one or more terminal devices (which may also be referred to as user equipment (user equipment, UE)), for example, a terminal device 102, a terminal device 103, and a terminal device 104 shown in FIG. 1. The communication system 100 may support a sidelink (sidelink) communication technology, for example, sidelink communication between the terminal device 102 and the terminal device 103, and sidelink communication between the terminal device 102 and the terminal device 104.

It should be understood that FIG. 1 is merely a diagram. The communication system may further include other network devices, for example, a core network device 105, and a wireless relay device and a wireless backhaul device that are not shown in FIG. 1. Quantities of network devices and terminal devices included in the mobile communication system are not limited in embodiments of this application.

The terminal device in embodiments of this application may be user equipment, an access terminal, a subscriber unit, a subscriber station, a mobile station, a mobile console, a remote station, a remote terminal, a mobile device, a user terminal, a wireless communication device, a user agent, or a user apparatus. The terminal in embodiments of this application may be a mobile phone (mobile phone), a tablet computer (pad), a computer having a wireless transceiver function, a virtual reality (virtual reality, VR) terminal, an augmented reality (augmented reality, AR) terminal, a wireless terminal in industrial control (industrial control), a wireless terminal in self driving (self driving), a wireless terminal in telemedicine (remote medical), a wireless terminal in a smart grid (smart grid), a wireless terminal in transportation safety (transportation safety), a wireless terminal in a smart city (smart city), a wireless terminal in a smart home (smart home), a cellular phone, a cordless phone, a session initiation protocol (session initiation protocol, SIP) phone, a wireless local loop (wireless local loop, WLL) station, a personal digital assistant (personal digital assistant, PDA), a handheld device having a wireless communication function, a computing device or another processing device connected to a wireless modem, a vehicle-mounted device, a wearable device, a terminal in a 5G network, a terminal in a future-evolved network, or the like.

The wearable device may also be referred to as a wearable intelligent device, and is a general term of wearable devices, such as glasses, gloves, watches, clothes, and shoes, that are developed by applying wearable technologies to intelligent designs of daily wear. The wearable device is a portable device that can be directly worn on a body or integrated into clothes or an accessory of a user. The wearable device is not only a hardware device, but also implements a powerful function through software support, data exchange, and cloud interaction. In a broad sense, wearable intelligent devices include full-featured and large-sized devices that can implement all or a part of functions without depending on smartphones, for example, smart watches or smart glasses, and devices that focus on only one type of application function and need to collaboratively work with other devices such as smartphones, for example, various smart bands, or smart jewelry for monitoring physical signs.

In addition, the terminal device may alternatively be a terminal device in an internet of things (internet of things, IoT) system. A main technical feature of the IoT is to connect things to a network by using a communication technology, to implement an intelligent network of human-machine interconnection and thing-thing interconnection. A specific form of the terminal device is not limited in this application.

It should be understood that, in embodiments of this application, the terminal device may be an apparatus configured to implement a function of the terminal device, or may be an apparatus that can support the terminal device in implementing the function, for example, a chip system. The apparatus may be mounted in the terminal. In embodiments of this application, the chip system may include a chip, or may include a chip and another discrete device.

A network device in embodiments of this application may be any device with a wireless transceiver function. The device includes but is not limited to an evolved NodeB (evolved NodeB, eNB), a home NodeB (for example, a home evolved NodeB, or a home NodeB, HNB), a baseband unit (baseband unit, BBU), an access point (access point, AP) in a wireless fidelity (wireless fidelity, Wi-Fi) system, a wireless relay node, a wireless backhaul node, a transmission point (transmission point, TP) or a transmission and reception point (transmission and reception point, TRP), or may be a next generation NodeB (next generation NodeB, gNB) or a transmission point (TRP or TP) in a 5th generation (5th generation, 5G) system such as a next generation wireless communication system (new radio, NR), and one antenna panel or a group of antenna panels (including a plurality of antenna panels) of a base station in the 5G system, or may be a network node that forms a gNB or a transmission point, for example, a baseband unit (BBU) or a distributed unit (distributed unit, DU).

In some deployments, a gNB may include a central unit (central unit, CU) and a DU. The CU implements some functions of the gNB, and the DU implements some functions of the gNB. For example, the CU is responsible for processing a non-real-time protocol and service, and implements functions of a radio resource control (radio resource control, RRC) layer and a packet data convergence protocol (packet data convergence protocol, PDCP) layer. The DU is responsible for processing a physical layer protocol and a real-time service, and implements functions of a radio link control (radio link control, RLC) layer, a media access control (media access control, MAC) layer, and a physical (physical, PHY) layer. The gNB may further include an active antenna unit (active antenna unit, AAU for short). The AAU implements some physical layer processing functions, radio frequency processing, and a function related to an active antenna. Information at the RRC layer is eventually converted into information at the PHY layer, or is converted from information at the PHY layer. Therefore, in this architecture, higher layer signaling such as RRC layer signaling may also be considered as being sent by the DU or sent by the DU and the AAU. It may be understood that the network device may be a device including one or more of a CU node, a DU node, and an AAU node. In addition, the CU may be classified into a network device in an access network (radio access network, RAN), or the CU may be classified into a network device in a core network (core network, CN). This is not limited in this application.

It should be understood that, in embodiments of this application, the network device may be an apparatus configured to implement a function of the network device, or may be an apparatus that can support the network device in implementing the function, for example, a chip system. The apparatus may be mounted in the network device.

The technical solutions in embodiments of this application may be applied to service scenarios such as backscatter communication and passive internet of things communication in an NR communication system, and various communication systems, for example, an LTE frequency division duplex (frequency division duplex, FDD) system, an LTE time division duplex (time division duplex, TDD) system, a 5G system, and vehicle-to-everything (vehicle-to-X, V2X). V2X may include vehicle-to-network (vehicle to network, V2N), vehicle-to-vehicle (vehicle to vehicle, V2V), vehicle-to-infrastructure (vehicle to infrastructure, V2I), a vehicle-to-pedestrian (vehicle to pedestrian, V2P), long term evolution-vehicle (long term evolution-vehicle, LTE-V), an internet of vehicles, machine type communication (machine type communication, MTC), an internet of things (Internet of things, IoT), long term evolution-machine (long term evolution-machine, LTE-M), machine-to-machine (machine to machine, M2M), device-to-device (device to device, D2D), or a future-evolved communication system, for example, a 6th generation (6th generation, 6G) system.

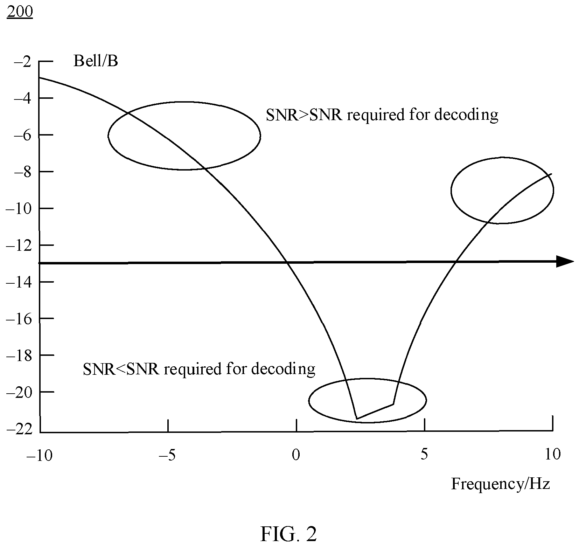

Currently, a modulation format in 802.11 supports binary phase shift keying (binary phase shift keying, BPSK)/quadrature phase shift keying (quadrature phase shift keying, QPSK)/16 quadrature amplitude modulation (quadrature amplitude modulation, QAM)/.../4096 quadrature amplitude modulation (quadrature amplitude modulation, QAM). Low-order BPSK modulation (which may be combined with a DCM technology) is mainly applied to a scenario with long-distance coverage with interference. In a case of channel fading, BPSK does not fully utilize diversity gains of I and Q signals. FIG. 2 shows some subcarriers on a fading channel. Signal-to-noise ratios (signal noise ratios, SNRs) of some subcarriers are greater than an SNR required for decoding, resulting in a waste of signal power. SNRs of some subcarriers are less than the SNR required for decoding, resulting in a decoding failure and performance deterioration when a proportion of deep fading subcarriers is large.

As shown in Table 1 and Table 2, an MCS 0 in current 802.11b/a/n/ac/ax/be is BPSK modulation.

**Table 1 Case in which an MCS 0 in a part of current 802.11 protocols indicates BPSK modulation**

| HE-MCS index | DCM | Mode | R | *N_{BPSCS}* | *N_{SD}* | *N_{CBPS}* | *N_{DBPS}* | Data rate (Mb/s) | | |
|---|---|---|---|---|---|---|---|---|---|---|
| | | | | | | | | 0.8 µs GI | 1.6 µs GI | 3.2 µs GI |
| 0 | 1 | BPSK | 1/2 1/2 | 1 | 117 | 117 | 58 | 4.3 | 4.0 | 3.6 |
| | 0 | | | | 234 | 234 | 117 | 8.6 | 8.1 | 7.3 |

**Table 2 Case in which an MCS 0 in a part of current 802.11 protocols indicates BPSK modulation**

| HE-MCS index | Mode | R | *N_{BPSCS,u}* | *N_{SD,u}* | *N_{CBPS,u}* | *N_{DBPS,u}* | Data rate (Mb/s) | | |
|---|---|---|---|---|---|---|---|---|---|
| | | | | | | | 0.8 µs GI | 1.6 µs GI | 3.2 µs GI |
| 0 | BPSK | 1/2 | 1 | 234 | 234 | 117 | 8.6 | 8.1 | 7.3 |

In fading channel and CSD scenarios, an MCS usually operates in a condition with a low SNR, especially an MCS 0 usually corresponds to a scenario with a lowest signal-to-noise ratio, sending is usually performed based on a single stream, to improve strength of a received signal, so as to improve link quality. In this case, diversity effect of a signal in I and Q dimensions cannot be fully used, resulting in a coding failure when fading is severe.

In view of this, this application provides a channel coding method, to ensure specific channel coding performance while reducing power consumption and complexity of channel coding.

The following describes the technical solutions of this application in detail by using interaction between a first communication apparatus and a second communication apparatus as an example. The first communication apparatus may be the terminal device (for example, the terminal device 102, the terminal device 103, or the terminal device 104) in FIG. 1, and the second communication apparatus may be the network device 101 in FIG. 1. Optionally, both the first communication apparatus and the second communication apparatus may alternatively be terminal devices. In this case, this communication system supports a sidelink communication technology. For example, the first communication apparatus is the terminal device 102, and the second communication apparatus is the terminal device 103 or the terminal device 104; or the first communication apparatus is the terminal device 103, and the second communication apparatus is the terminal device 104 or the terminal device 102.

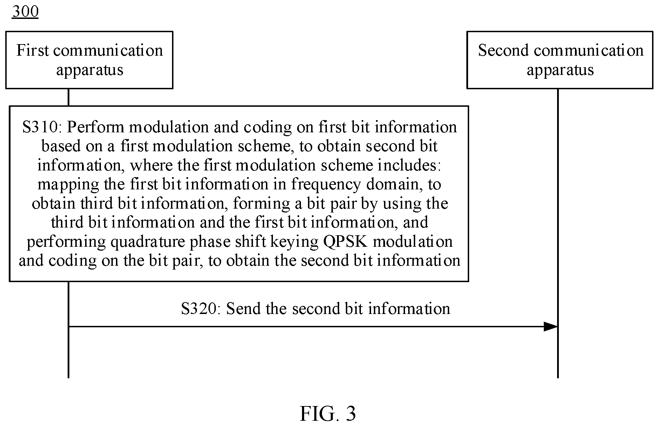

FIG. 3 is a flowchart of an example of a modulation and coding method according to this application.

S310: A first communication apparatus performs modulation and coding on first bit information based on a first modulation scheme, to obtain second bit information, where the first modulation scheme includes: mapping the first bit information in frequency domain, to obtain third bit information, forming a bit pair by using the third bit information and the first bit information, and performing QPSK modulation and coding on the bit pair, to obtain the second bit information.

Mapping includes but is not limited to cyclic shift or another typical mapping mode, for example, one-to-one mapping, one-to-many mapping, or many-to-one mapping.

The mapping the first bit information in frequency domain may specifically include: performing cyclic shift on the first bit information in frequency domain based on a sending mode in which the first communication apparatus sends the second bit information.

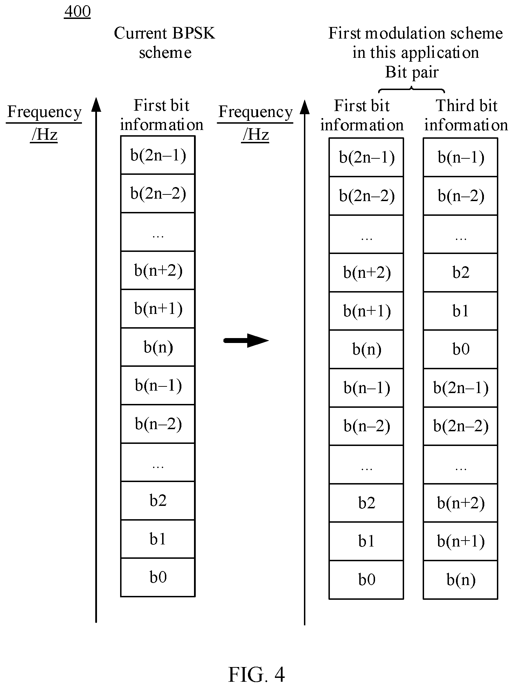

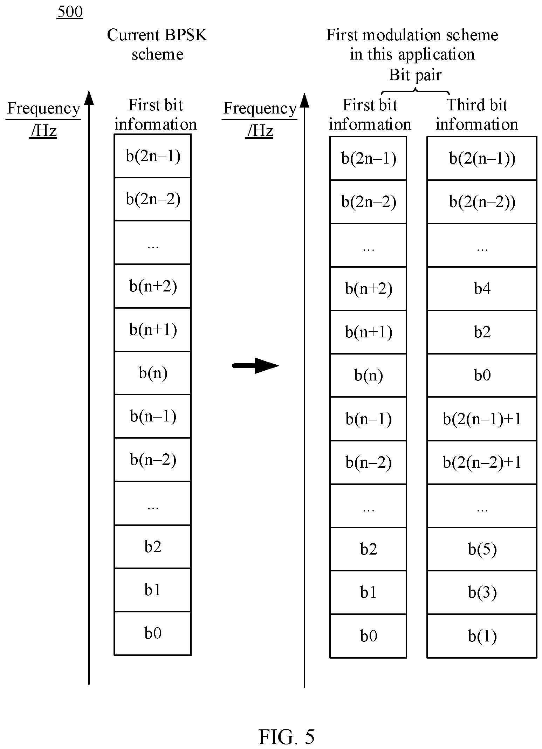

Optionally, the first bit information includes M pieces of bit information, and M is a positive integer. In a first possible implementation, the performing cyclic shift on the first bit information in frequency domain may specifically include: performing cyclic shift on the M pieces of bit information in frequency domain consecutively. For example, as shown in FIG. 4, in a resource unit (resource unit, RU) of one user in one orthogonal frequency division multiplexing (orthogonal frequency division multiplexing, OFDM) symbol, compared with conventional BPSK modulation, in the first modulation scheme provided in this application, cyclic shift is performed on all bit information of the user in frequency domain. To be specific, in one bit sequence, b(0), b(1), b(2), and the like are adjacent, b(n), b(n+1), b(n+2), and the like are adjacent, and on each subcarrier, a cyclically shifted bit is combined with an original bit for QPSK modulation. In a second possible implementation, the performing cyclic shift on the first bit information in frequency domain may specifically include: performing cyclic shift on the M pieces of bit information in frequency domain at an interval of N pieces of bit information, where N is a positive integer less than M. For example, as shown in FIG. 5, in an RU of one user in one OFDM symbol, compared with conventional BPSK modulation, in the first modulation scheme provided in this application, cyclic shift is performed on bit information of the user in frequency domain at an interval of one piece of bit information. To be specific, in one bit sequence, b(0), b(2), b(4), and the like are adjacent, b(1), b(3), b(5), and the like are adjacent, and on each subcarrier, a cyclically shifted bit is combined with an original bit for QPSK modulation. Therefore, due to a characteristic of periodic frequency domain fading in a CSD scenario, adjacent bit information can be prevented from falling into a deep fading subcarrier. This improves modulation and coding performance.

It should be understood that the foregoing interval of one piece of bit information is merely a possible example. In actual application, there may be intervals of different quantities of pieces of bit information based on different resource configuration statuses, including but not limited to an interval of one piece of bit information and an interval of two pieces of bit information.

S320: The first communication apparatus sends the second bit information.

Correspondingly, a second communication apparatus receives the second bit information, and demodulates the second bit information based on the first modulation scheme, to obtain the first bit information.

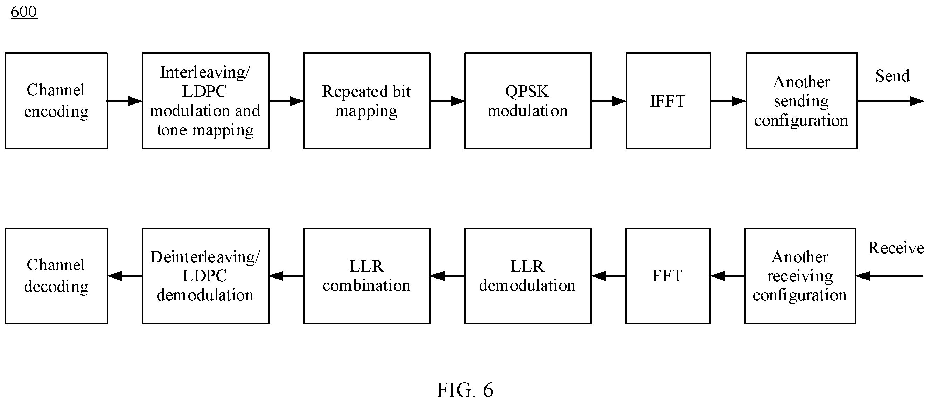

As shown in FIG. 6, in the modulation and coding method provided in this application, after conventional channel encoding and interleaving/low-density parity-check code (low density parity check code, LDPC) tone mapping are performed, a transmitter device (namely, the first communication apparatus) only needs to map bit information of a corresponding user in frequency domain during modulation and coding (modulation), form a bit pair by using bit information obtained through mapping and the original bit information, invoke QPSK modulation, and then apply conventional inverse fast Fourier transform (inverse fast fourier transform, IFFT) and another sending configuration. A receiver device (namely, the second communication apparatus) only needs to add a step of performing multiple-input multiple-output (multiple input multiple output, MIMO) demodulation based on QPSK to a conventional receiving and decoding process, perform a reverse operation (demap) after generating a log likelihood ratio (log likelihood ratio, LLR) (which may be referred to as a soft information bit), and combine the LLR soft information.

Optionally, the first communication apparatus may further send indication information, where the indication information indicates the first modulation scheme. Correspondingly, the second communication apparatus receives the indication information, and obtains the first modulation scheme based on the indication information. The indication information may be a field or signaling, and the first communication apparatus indicates the first modulation scheme to the second communication apparatus via the field or the signaling.

Before the first modulation scheme is indicated by the indication information, the first communication apparatus and the second communication apparatus need to first exchange capability information, to determine that both the first communication apparatus and the second communication apparatus support an enhanced modulation and coding scheme (including the first modulation scheme). Specifically, the first communication apparatus may indicate an enhanced modulation and coding capability via "extended capabilities" (extended capabilities) in an association request frame (Association Request frame format) or a reassociation request frame (Association Request frame format). A reserved bit (reserved bit) in the extended capabilities element (element) may be extended to an enhanced modulation and coding capability indication. For example, the extended capabilities element carries information about a capability of the first communication apparatus. Specifically, a specified capability may be indicated by a capability information field (extended capabilities) in Table 3 or Table 4. "Octets" indicates octets used in an internet standard, "element ID" indicates an ID of this element, "length" indicates a length, "extended capabilities" may indicate a specified capability (for example, the enhanced modulation and coding scheme, including the first modulation scheme) of a first sending apparatus, and "The extended capabilities element is present if any of the fields in this element is non-zero" means that an extended function element is present if any field in the element is non-zero. For another example, as shown in Table 5, "reserved bit" (reserved bit) exists in the table. Therefore, a specified capability (for example, the enhanced modulation and coding scheme, including the first modulation scheme) may be indicated by "reserved bit".

**Table 3 Possible indication manners of the capability information of the first communication apparatus**

| | Element ID | Length | Extended capabilities |
|---|---|---|---|
| Octets | 1 | 1 | Variable |

**Table 4 Possible indication manners of the capability information of the first communication apparatus**

| Order | Information | Notes |
|---|---|---|
| 15 | Extended capabilities | The extended capabilities element is present if any of the fields in this element is non-zero. |

**Table 5 Possible indication manners of the capability information of the first communication apparatus**

| Bit | Information | Notes |
|---|---|---|
| 86 | Reserved | |
| ... | ... | ... |
| 88-n | Reserved | |

It should be understood that the possible indication manner of the capability information of the first communication apparatus is described above by using the first communication apparatus as an example. Correspondingly, the capability information of the second communication apparatus may also be indicated in a same manner for the second communication apparatus.

After both the first communication apparatus and the second communication apparatus indicate, by exchanging the capability information, supporting the enhanced modulation and coding scheme (including the first modulation scheme), sending and receiving corresponding to the modulation and coding scheme may be performed in subsequent information transmission. The first communication apparatus may indicate the first modulation scheme to the second communication apparatus in the following three manners:

Manner 1: A U-SIG field is extended to indicate the first modulation scheme. Specifically, as shown in Table 6 and Table 7 below, the first modulation scheme is indicated by a disregard bit (disregard bit) or a validate bit (validate bit) in U-SIG, for example, B20 to B24 and B25 in U-SIG1 and B2 and B8 in U-SIG2. In this manner, an ethernet (ethernet, ETH) frame is uniformly indicated without distinguishing between users. When this bit is set to 0 (or 1), it indicates that the first modulation scheme is used when the MCS is an MCS 0 (or MCS 1).

**Table 6 Indicating the first modulation scheme by B20 to B24 and B25**

| Bit | Field | Number of bits | Description |
|---|---|---|---|
| B20 to B24 | Disregard | 5 | Is set to 0 (or 1). It indicates the first modulation scheme. |
| B25 | Validate | 1 | Is set to 0 (or 1). It indicates the first modulation scheme. |

**Table 7 Indicating the first modulation scheme by B2 and B8**

| Bit | Field | Number of bits | Description |
|---|---|---|---|
| B2 | Validate | 1 | Is set to 0 (or 1). It indicates the first modulation scheme. |
| B8 | Validate | 1 | Is set to 0 (or 1). It indicates the first modulation scheme. |

Manner 2: An EHT-SIG field is extended to indicate the first modulation scheme. Specifically, as shown in Table 8 and Table 9 below, the first modulation scheme is indicated by a disregard bit, for example, B13 to B16, in a common field in EHT-SIG. In this manner, an ethernet (ethernet, ETH) frame is uniformly indicated without distinguishing between users. When this bit is set to 0 (or 1), it indicates that the first modulation scheme is used when the MCS is the MCS 0 (or MCS 1).

**Table 8 Example 1 of indicating the first modulation scheme by B13 to B16**

| Bit | Subfield | Number of subfields | Number of bits per subfield | Description |
|---|---|---|---|---|
| B13 to B16 | Disregard | 1 | 4 | Is set to 0 (or 1). It indicates the first modulation scheme. |

**Table 9 Example 2 of indicating the first modulation scheme by B13 to B16**

| Bit | Subfield | Number of bits | Description |
|---|---|---|---|
| B13 to B16 | Disregard | 4 | Is set to 0 (or 1). It indicates the first modulation scheme. |

Manner 3: The EHT-SIG field is extended to indicate the first modulation scheme. Specifically, as shown in Table 10 below, the first modulation scheme is indicated by a reserved bit (reserved bit) in a user field in EHT-SIG, for example, B15. In this solution, users are distinguished, and only non-multi-user multiple-input multiple-output (non-multi-user multiple-input multiple-output, non-MU-MIMO) is supported. When this bit is set to 0 (or 1), it indicates that the first modulation scheme is used when the MCS is the MCS 0 (or MCS 1).

**Table 10 Indicating the first modulation scheme by B15**

| Bit | Subfield | Number of bits | Description |
|---|---|---|---|
| B13 to B16 | Reserved | 1 | Is set to 0 (or 1). It indicates the first modulation scheme. |

It should be understood that the foregoing several indication manners are merely examples, and should not be construed as a limitation on the technical solutions of this application. A person skilled in the art may know that the first modulation scheme may be indicated by other signaling or fields.

It should be further understood that the two possible cyclic shift manners shown in FIG. 4 and FIG. 5 correspond to different first modulation schemes. During indication, different indication manners may be used for differentiation. For example, in the indication manner shown in Table 6, the first modulation scheme shown in FIG. 4 may be indicated by an MCS 20 (obtained by extending B20), and the first modulation scheme shown in FIG. 5 may be indicated by an MCS 25 (obtained by extending B25). For another example, in the indication manner shown in Table 7, the first modulation scheme shown in FIG. 4 may be indicated by an MCS 2 (obtained by extending B2), and the first modulation scheme shown in FIG. 5 is indicated by an MCS 8 (obtained by extending B8).

According to the technical solution of this application, after bit information of the user is mapped in frequency domain, bit information obtained through mapping and the original bit information form a bit pair, and quadrature phase shift keying modulation is invoked. This helps improve modulation and coding performance without increasing an additional resource. According to the technical solution of this application, a coverage capability of a Wi-Fi product and a throughput in a low signal-to-noise ratio can be improved (a gain of about 2 dB in CSD and fading channel scenarios). The solution is simple, and basically does not need to increase a resource.

It should be understood that sequence numbers of the foregoing processes do not mean execution sequences. The execution sequence of the processes should be determined based on functions and internal logic of the processes, and should not be construed as any limitation on implementation processes of embodiments of this application.

It should be further understood that, in embodiments of this application, unless otherwise stated or there is a logic conflict, terms and/or descriptions in different embodiments are consistent and may be mutually referenced, and technical features in different embodiments may be combined based on an internal logical relationship thereof, to form a new embodiment.

It may be understood that, in the foregoing embodiment of this application, the method implemented by a communication device may alternatively be implemented by a component (for example, a chip or a circuit) that can be disposed inside the communication device.

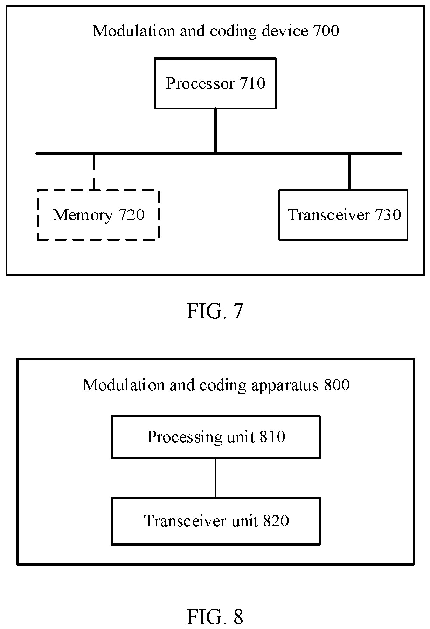

The following describes in detail modulation and coding apparatuses provided in embodiments of this application with reference to FIG. 7 and FIG. 8. It should be understood that descriptions of apparatus embodiments correspond to the descriptions of the method embodiment. Therefore, for content that is not described in detail, refer to the foregoing method embodiment. For brevity, some content is not described again.

In embodiments of this application, functional modules of a transmitter device or a receiver device may be obtained through division based on the foregoing method examples. For example, each functional module may be obtained through division based on each function, or two or more functions may be integrated into one processing module. The integrated module may be implemented in a form of hardware, or may be implemented in a form of a software functional module. It should be noted that, in embodiments of this application, division into the modules is an example, and is merely logical function division. In actual implementation, there may be another division manner. Descriptions are provided below by using an example in which each functional module is obtained through division based on each corresponding function.

FIG. 7 is a block diagram of an example of a modulation and coding device 700 according to this application. Any device such as the first communication apparatus or the second communication apparatus in either the method 300 or the method 400 may be implemented by the modulation and coding device shown in FIG. 7.

It should be understood that the modulation and coding device 700 may be a physical device, a component (for example, an integrated circuit or a chip) of a physical device, or a functional module in a physical device.

As shown in FIG. 7, the modulation and coding device 700 includes one or more processors 710. Optionally, the processor 710 may invoke an interface to implement receiving and sending functions. The interface may be a logical interface or a physical interface. This is not limited. For example, the interface may be a transceiver circuit, an input/output interface, or an interface circuit. The transceiver circuit, the input/output interface, or the interface circuit configured to implement the receiving and sending functions may be separated, or may be integrated together. The transceiver circuit or the interface circuit may be configured to read and write code/data, or the transceiver circuit or the interface circuit may be configured to transmit or transfer a signal.

Optionally, the interface may be implemented by a transceiver. Optionally, the modulation and coding device 700 may further include a transceiver 730. The transceiver 730 may also be referred to as a transceiver unit, a transceiver machine, a transceiver circuit, the like, and is configured to implement a transceiver function.

Optionally, the modulation and coding device 700 may further include a memory 720. A specific deployment location of the memory 720 is not specifically limited in embodiments of this application. The memory may be integrated into the processor, or may be independent of the processor. When the modulation and coding apparatus 700 does not include a memory, the modulation and coding device 700 only needs to have a processing function, and the memory may be deployed at another location (for example, a cloud system).

The processor 710, the memory 720, and the transceiver 730 communicate with each other through an internal connection path, to transfer a control signal and/or a data signal.

It may be understood that, although not shown, the modulation and coding device 700 may further include another apparatus, for example, an input apparatus, an output apparatus, or a battery.

Optionally, in some embodiments, the memory 720 may store execution instructions for performing the method in embodiments of this application. The processor 710 may execute the instructions stored in the memory 720 and complete, in combination with other hardware (for example, the transceiver 730), the steps performed in the following method. For specific working processes and beneficial effect, refer to descriptions in the foregoing method embodiment.

The method disclosed in embodiments of this application may be applied to the processor 710, or may be implemented by the processor 710. The processor 710 may be an integrated circuit chip, and has a signal processing capability. In an implementation process, the steps of the method may be performed through a hardware integrated logic circuit in the processor or by using instructions in a form of software. The foregoing processor may be a general-purpose processor, a digital signal processor (digital signal processor, DSP), an application-specific integrated circuit (application specific integrated circuit, ASIC), a field programmable gate array (field programmable gate array, FPGA) or another programmable logic device, a discrete gate or transistor logic device, or a discrete hardware component. The processor may implement or perform the method, the steps, and logical block diagrams that are disclosed in embodiments of this application. The general-purpose processor may be a microprocessor, or the processor may be any conventional processor or the like. The steps of the method disclosed with reference to embodiments of this application may be directly performed and completed by a hardware coding processor, or may be performed and completed by a combination of hardware and software modules in the coding processor. The software module may be located in a mature storage medium in the art, such as a random access memory (random access memory, RAM), a flash memory, a read-only memory (read-only memory, ROM), a programmable read-only memory, an electrically erasable programmable memory, or a register. The storage medium is located in the memory, and a processor reads instructions in the memory and completes the steps in the foregoing method in combination with hardware of the processor.

It may be understood that the memory 720 may be a volatile memory or a non-volatile memory, or may include both a volatile memory and a non-volatile memory. The non-volatile memory may be a read-only memory ROM, a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory RAM, and may serve as an external cache. By way of example but not limitative description, many forms of RAMs may be used, for example, a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchronous link dynamic random access memory (synchlink DRAM, SLDRAM), and a direct rambus random access memory (direct rambus RAM, DR RAM). It should be noted that the memory in the system and the method described in this specification includes but is not limited to these memories and any memory of another proper type.

FIG. 8 is a block diagram of a modulation and coding apparatus 800 according to this application.

Optionally, a specific form of the modulation and coding apparatus 800 may be a general-purpose computer device or a chip in a general-purpose computer device. This is not limited in embodiments of this application. As shown in FIG. 8, the modulation and coding apparatus includes a processing unit 810 and a transceiver unit 820.

Specifically, the modulation and coding apparatus 800 may be any device in this application, and may implement a function that can be implemented by the device. It should be understood that the modulation and coding apparatus 800 may be a physical device, a component (for example, an integrated circuit or a chip) of a physical device, or a functional module in a physical device.

In a possible design, the modulation and coding apparatus 800 may be the first communication apparatus in the foregoing method embodiment, or may be a chip for implementing functions of the first communication apparatus in the foregoing method embodiment.

In an example, the communication apparatus is configured to perform an action performed by the first communication apparatus in FIG. 3, the transceiver unit 820 is configured to perform S420, and the processing unit 810 is configured to perform S410.

For example, the processing unit 810 is configured to: perform modulation and coding on a first information bit based on a first modulation scheme, to obtain a second information bit. The first modulation scheme includes: mapping the first information bit in frequency domain, to obtain a third information bit, forming a bit pair by using the third information bit and the first information bit, and performing QPSK modulation and coding on the bit pair, to obtain the second information bit. The transceiver unit 520 is configured to send the second information bit.

Optionally, the processing unit 810 is specifically configured to perform cyclic shift on the first information bit in frequency domain based on a sending mode in which the first communication apparatus sends the second information bit.

Optionally, the first information bit includes M information bits, and M is a positive integer. The processing unit 810 is specifically configured to perform cyclic shift on the M information bits in frequency domain consecutively.

Optionally, the first information bit includes M information bits, and M is a positive integer. The processing unit 810 is specifically configured to perform cyclic shift on the M information bits in frequency domain at an interval of N information bits, where N is a positive integer less than M.

Optionally, the transceiver unit 820 is further configured to send indication information, where the indication information indicates the first modulation scheme.

Optionally, the indication information is carried in a disregard bit (Disregard bit), a validate bit (Validate bit), or a reserved bit (Reserved bit).

Optionally, the indication information includes a modulation and coding scheme MCS.

Optionally, the transceiver unit 820 is further configured to receive capability information of the second communication apparatus, where the capability information indicates that the second communication apparatus supports the first modulation scheme.

It should be further understood that when the modulation and coding apparatus 800 is the first communication apparatus, the transceiver unit 820 in the modulation and coding apparatus 800 may be implemented by a communication interface (for example, a transceiver or an input/output interface), and the processing unit 810 in the modulation and coding apparatus 800 may be implemented by at least one processor, for example, may correspond to the processor 710 shown in FIG. 7.

Optionally, the modulation and coding apparatus 800 may further include a storage unit. The storage unit may be configured to store instructions or data. The processing unit may invoke the instructions or the data stored in the storage unit, to implement a corresponding operation.

It should be understood that a specific process in which the units perform the foregoing corresponding steps is described in detail in the foregoing method embodiment. For brevity, details are not described herein.

In another possible design, the modulation and coding apparatus 800 may be the second communication apparatus in the foregoing method embodiment, or may be a chip for implementing functions of the second communication apparatus in the foregoing method embodiment.

In an example, the communication apparatus is configured to perform an action performed by the second communication apparatus in FIG. 4.

For example, the transceiver unit 820 is configured to receive a second information bit. The processing unit 810 is configured to demodulate the second information bit based on a first modulation scheme, to obtain a first information bit. The first modulation scheme includes: mapping the first information bit in frequency domain, to obtain a third information bit, forming a bit pair by using the third information bit and the first information bit, and performing quadrature phase shift keying QPSK modulation and coding on the bit pair, to obtain the second information bit.

Optionally, the third information bit is obtained by performing cyclic shift on the first information bit in frequency domain based on a sending mode in which the first communication apparatus sends the second information bit.

Optionally, the first information bit includes M information bits, and M is a positive integer. The third information bit is obtained by performing cyclic shift on the M information bits in frequency domain consecutively.

Optionally, the first information bit includes M information bits, and M is a positive integer. The third information bit is obtained by performing cyclic shift on the M information bits in frequency domain at an interval of N information bits, where N is a positive integer less than M.

Optionally, the transceiver unit 820 is further configured to receive indication information, where the indication information indicates the first modulation scheme.

Optionally, the indication information is carried in a disregard bit (Disregard bit), a validate bit (Validate bit), or a reserved bit (Reserved bit).

Optionally, the indication information includes a modulation and coding scheme MCS.

Optionally, the transceiver unit 820 is further configured to send capability information, where the capability information indicates that the second communication apparatus supports the first modulation scheme.

It should be further understood that when the modulation and coding apparatus 800 is the second communication apparatus, the transceiver unit 820 in the modulation and coding apparatus 800 may be implemented by a communication interface (for example, a transceiver or an input/output interface), for example, may correspond to the communication interface shown in FIG. 7, and the processing unit 810 in the modulation and coding apparatus 800 may be implemented by at least one processor, for example, may correspond to the processor 710 shown in FIG. 7.

Optionally, the modulation and coding apparatus 800 may further include a storage unit. The storage unit may be configured to store instructions or data. The processing unit may invoke the instructions or the data stored in the storage unit, to implement a corresponding operation.

It should be understood that a specific process in which the units perform the foregoing corresponding steps is described in detail in the foregoing method embodiment. For brevity, details are not described herein.

In addition, in this application, the modulation and coding apparatus 800 is presented in a form of a functional module. The "module" herein may be an application-specific integrated circuit ASIC, a circuit, a processor that executes one or more software or firmware programs, a memory, an integrated logic circuit, and/or another component that can provide the foregoing functions. In a simple embodiment, a person skilled in the art may figure out that the apparatus 800 may be in the form shown in FIG. 8. The processing unit 810 may be implemented by the processor 710 shown in FIG. 7. Optionally, if the computer device shown in FIG. 7 includes the memory 720, the processing unit 810 may be implemented by the processor 710 and the memory 720. The transceiver unit 820 may be implemented by the transceiver 730 shown in FIG. 7. The transceiver 730 includes a receiving function and a sending function. Specifically, the processor is implemented by executing a computer program stored in the memory. Optionally, when the apparatus 800 is the chip, a function and/or an implementation process of the transceiver unit 820 may be alternatively implemented by a pin, a circuit, or the like. Optionally, the memory may be a storage unit in the chip, for example, a register or a cache. Alternatively, the storage unit may be a storage unit that is in the modulation and coding apparatus and that is located outside the chip, for example, the memory 720 shown in FIG. 7, or may be a storage unit that is deployed in another system or device and is not located in the computer device.

Various aspects or features of this application may be implemented as a method, an apparatus, or a product using standard programming and/or engineering technologies. For example, a computer-readable medium may include but is not limited to: a magnetic storage component (for example, a hard disk, a floppy disk or a magnetic tape), an optical disc (for example, a compact disc (compact disc, CD), a digital versatile disc (digital versatile disc, DVD)), a smart card and a flash memory component (for example, an erasable programmable read-only memory (erasable programmable read-only memory, EPROM), a card, a stick, or a key drive). In addition, various storage media described in this specification may represent one or more devices and/or other machine-readable media that are configured to store information. The term "machine-readable media" may include but is not limited to various other media that can store, contain and/or carry instructions and/or data.

According to the method provided in embodiments of this application, this application further provides a computer program product. The computer program product includes a computer program or a group of instructions. When the computer program or the group of instructions is run on a computer, the computer is enabled to perform any possible method in the embodiment shown in FIG. 3.

According to the method provided in embodiments of this application, this application further provides a computer-readable storage medium. The computer-readable medium stores a program or a group of instructions. When the program or the group of instructions is run on a computer, the computer is enabled to perform any possible method in the embodiment shown in FIG. 3.

According to the method provided in embodiments of this application, this application further provides a communication system. The communication system includes the foregoing apparatus or device.

The terms such as "component", "module", and "system" used in this specification are used to indicate computer-related entities, hardware, firmware, combinations of hardware and software, software, or software being executed. For example, a component may be, but is not limited to, a process that runs on a processor, a processor, an object, an executable file, an execution thread, a program, and/or a computer. As illustrated by using figures, both a computing device and an application that runs on the computing device may be components. One or more components may reside within a process and/or an execution thread, and a component may be located on one computer and/or distributed between two or more computers. In addition, these components may be executed from various computer-readable media that store various data structures. The components may communicate by using a local and/or remote process and according to, for example, a signal having one or more data packets (for example, data from two components interacting with another component in a local system, a distributed system, and/or across a network such as the internet interacting with another system by using the signal).

It should also be understood that the term "and/or" in this specification describes only an association relationship between associated objects and indicates that three relationships may exist. For example, A and/or B may indicate the following three cases: Only A exists, both A and B exist, and only B exists. In addition, the character "/" in this specification generally indicates an "or" relationship between the associated objects.

It should be further understood that numbers "first", "second", and the like are introduced in embodiments of this application only to distinguish between different objects, for example, distinguish between different "information", "devices", or "units". Understanding of a specific object and a correspondence between different objects should be determined based on functions and internal logic of the specific object, and should not constitute any limitation on an implementation process of embodiments of this application.

It may be clearly understood by a person skilled in the art that, for ease and brevity of description, for a detailed working process of the foregoing system, apparatus, and unit, refer to a corresponding process in the foregoing method embodiment. Details are not described herein again.

It should be understood that the term "and/or" in this specification describes only an association relationship between associated objects and indicates that three relationships may exist. For example, A and/or B may indicate the following three cases: Only A exists, both A and B exist, and only B exists. In addition, the character "/" in this specification generally indicates an "or" relationship between the associated objects.

It should be further understood that numbers "first", "second", and the like are introduced in embodiments of this application only to distinguish between different objects, for example, distinguish between different "information", "devices", or "units". Understanding of a specific object and a correspondence between different objects should be determined based on functions and internal logic of the specific object, and should not constitute any limitation on an implementation process of embodiments of this application.

It may be clearly understood by a person skilled in the art that, for ease and brevity of description, for a detailed working process of the foregoing system, apparatus, and unit, refer to a corresponding process in the foregoing method embodiment. Details are not described herein again.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A modulation and coding method, comprising:
performing, by a first communication apparatus, modulation and coding on first bit information based on a first modulation scheme, to obtain second bit information, wherein the first modulation scheme comprises: mapping the first bit information in frequency domain, to obtain third bit information, forming a bit pair by using the third bit information and the first bit information, and performing quadrature phase shift keying QPSK modulation and coding on the bit pair, to obtain the second bit information; and
sending, by the first communication apparatus, the second bit information.

2. The method according to claim 1, wherein the mapping the first bit information in frequency domain comprises:
performing cyclic shift on the first bit information in frequency domain based on a sending mode in which the first communication apparatus sends the second bit information.

3. The method according to claim 2, wherein the first bit information comprises M pieces of bit information, and M is a positive integer; and
the performing cyclic shift on the first bit information in frequency domain comprises:
performing cyclic shift on the M pieces of bit information in frequency domain consecutively.

4. The method according to claim 2, wherein the first bit information comprises M pieces of bit information, and M is a positive integer; and
the performing cyclic shift on the first bit information in frequency domain comprises:
performing cyclic shift on the M pieces of bit information in frequency domain at an interval of N pieces of bit information, wherein N is a positive integer less than M.

5. The method according to any one of claims 1 to 4, wherein the method further comprises:
sending, by the first communication apparatus, indication information, wherein the indication information indicates the first modulation scheme.

6. The method according to claim 5, wherein the indication information is carried in a disregard bit, a validate bit, or a reserved bit.

7. The method according to claim 5 or 6, wherein the indication information comprises a modulation and coding scheme MCS.

8. The method according to any one of claims 1 to 7, wherein the method further comprises:
receiving, by the first communication apparatus, capability information of the second communication apparatus, wherein the capability information indicates that the second communication apparatus supports the first modulation scheme.

9. A modulation and coding method, comprising:
receiving, by a second communication apparatus, second bit information; and
demodulating, by the second communication apparatus, the second bit information based on a first modulation scheme, to obtain first bit information, wherein the first modulation scheme comprises: mapping the first bit information in frequency domain, to obtain third bit information, forming a bit pair by using the third bit information and the first bit information, and performing quadrature phase shift keying QPSK modulation and coding on the bit pair, to obtain the second bit information.

10. The method according to claim 9, wherein the third bit information is obtained by performing cyclic shift on the first bit information in frequency domain based on a sending mode in which a first communication apparatus sends the second bit information.

11. The method according to claim 10, wherein the first bit information comprises M pieces of bit information, and M is a positive integer; and the third bit information is obtained by performing cyclic shift on the M pieces of bit information in frequency domain consecutively.

12. The method according to claim 10, wherein the first bit information comprises M pieces of bit information, and M is a positive integer; and the third bit information is obtained by performing cyclic shift on the M pieces of bit information in frequency domain at an interval of N pieces of bit information, wherein N is a positive integer less than M.

13. The method according to any one of claims 9 to 12, wherein the method further comprises:
receiving, by the second communication apparatus, indication information, wherein the indication information indicates the first modulation scheme.

14. The method according to claim 13, wherein the indication information is carried in a disregard bit, a validate bit, or a reserved bit.

15. The method according to claim 13 or 14, wherein the indication information comprises a modulation and coding scheme MCS.

16. The method according to any one of claims 9 to 15, wherein the method further comprises:
sending, by the first communication apparatus, capability information, wherein the capability information indicates that the second communication apparatus supports the first modulation scheme.

17. A communication apparatus, comprising:
a memory, configured to store a computer program or instructions; and
a processor, configured to execute the computer program or instructions stored in the memory, so that the communication apparatus performs the method according to any one of claims 1 to 8, or
the communication apparatus performs the method according to any one of claims 9 to 16.

18. A computer-readable storage medium, wherein the computer-readable storage medium stores a computer program or instructions, and when the computer program or instructions are executed by a communication apparatus, the method according to any one of claims 1 to 16 is performed.

19. A computer program product comprising instructions, wherein when the computer program product runs on a computer, the method according to any one of claims 1 to 16 is performed.

20. A chip system, comprising a processor, configured to invoke a computer program or instructions from a memory and run the computer program or instructions, so that a communication apparatus in which the chip system is installed implements the method according to any one of claims 1 to 16.
